# EUROPÄISCHE PATENTANMELDUNG

(11) **EP 3 836 326 A1**
(43) Veröffentlichungstag der Anmeldung: **16.06.2021**
(21) Anmeldenummer: 20212369.1
(22) Anmeldetag: 08.12.2020
(51) Int. Cl.: H02G 3/04, B29C 48/00, F16L 11/12, G09F 3/00, H01B 7/36, H02G 9/06, G02B 6/44

(54) **VERFAHREN ZUM BAU EINES ROHRSYSTEMS FÜR DIE AUFNAHME WENIGSTENS EINES TELEKOMMUNIKATIONSKABELS**

(30) Priorität: 12.12.2019 DE 102019134076
(71) Anmelder: REHAU AG + Co, 95111 Rehau (DE)
(72) Erfinder: Erdorf, Stefan, 90574 Roßtal (DE)

(57) **Zusammenfassung**

Die Erfindung betrifft ein Verfahren zum Bau eines Rohrsystems (1) für die Aufnahme wenigstens eines Telekommunikationskabels mit folgenden Schritten: Bereitstellen eines Rohrbündels (2), in welchen mindestens ein Einzelrohr (3', 3", 3"') aufgenommen ist; Verlegen des Rohrbündels (2) entlang einer vorbestimmten Trasse (4); Ermittlung der Längeninformation des Rohrbündels (2) am Startpunkt (5) anhand einer Rohrbündelkennzeichnung (6); Identifikation und Ermittlung der Längeninformation des Einzelrohrs (3', 3", 3"') am Startpunkt (5) anhand einer Rohrkennzeichnung (7); Öffnung des Rohrbündels (2) und Herausführung des Einzelrohrs (3", 3"') an einem ersten Zielpunkt (8); Ermittlung der Längeninformation des Rohrbündels (2) am ersten Zielpunkt (8) anhand der Rohrbündelkennzeichnung (6); Identifikation und Ermittlung der Längeninformation des Einzelrohrs (3", 3"') am ersten Zielpunkt (8) anhand einer Rohrkennzeichnung (9", 9"'); Abtrennung des Einzelrohrs (3", 3"') im Bereich des ersten Zielpunkts (8); Bereitstellen eines Anschlussrohrs (10", 10"'); Verbinden des Endes (14", 14"') des Einzelrohrs (3", 3'") mit einem Anschlussrohr (10", 10'"); Identifikation und Ermittlung der Längeninformation des Anschlussrohrs (10", 10'") im Bereich des ersten Zielpunkts (8) anhand einer Anschlussrohrkennzeichnung (11", 11'"); Verlegen des Anschlussrohrs (10", 10'") entlang einer vorbestimmten Anschlusstrasse (12", 12'") bis zum zweiten Zielpunkt (13", 13'"); Identifikation und Ermittlung der Längeninformation des Anschlussrohrs (10", 10'") am zweiten Zielpunkt (13", 13'") anhand der Anschlussrohrkennzeichnung (11", 11'"); Addition der Länge des Einzelrohrs (3", 3'") aus den Längeninformationen zwischen dem Startpunkt (5) und dem ersten Zielpunkt (8) und der Länge des Anschlussrohrs (10", 10'") aus der Längeninformation zwischen dem ersten Zielpunkt (8) und dem zweiten Zielpunkt (13", 13'"); Anzeige oder Bereitstellung einer Information über die Wegstrecke zwischen dem Startpunkt (5) und dem zweiten Zielpunkt (13", 13'") anhand der ermittelten Länge.

Darüber hinaus betrifft die Erfindung noch ein Telekommunikationssystem mit einem solchen Rohrsystem (1).

## Beschreibung

Die vorliegende Erfindung betrifft ein Verfahren zum Bau eines Rohrsystems für die Aufnahme wenigstens eines Telekommunikationskabels.

Weiterhin betrifft die Erfindung ein Rohrsystem, das nach dem Verfahren gebaut ist.

Schließlich betrifft die Erfindung noch ein Telekommunikationssystem, umfassend ein Rohrsystem und wenigstens ein Telekommunikationskabel.

Aus dem Stand der Technik sind mehrlumige Kabelschutzrohre bekannt, die dazu dienen, Kabel für die Telekommunikation beim Eingraben ins Erdreich zu schützen. Durch das Vorhandensein mehrerer Rohre kann so eine einfache Zuordnung der einzelnen Kabel, beispielsweise im Hinblick auf eine Verteilerstation, einen Knotenpunkt oder eine Endstelle vorgenommen werden. Es ist bekannt, diese Art von Rohren durch Extrusion einzelner Polymerrohre, auf die eine Hülle aufextrudiert wird und die die Rohre umhüllt, herzustellen.

Bei der Verlegung der Kabelschutzrohre und beim Einziehen bzw. Einblasen der Telekommunikationskabel gibt es erheblichen Optimierungsbedarf, wozu es einer Weiterentwicklung dieser Techniken bedarf.

So ist es bei der Erschließung eines Neubaugebiets nach der Installation der Kabelschutzrohre in Form eines Rohrsystems nachteilig, dass beim Einziehen bzw. Einblasen der Telekommunikationskabel jeweils eine Person am Startpunkt, an dem das Einziehen bzw. Einblasen erfolgt, und am Zielpunkt bereitstehen muss, um sich gegenseitig abzustimmen, dass das Telekommunikationskabel am Zielpunkt angekommen und dort in der benötigten Länge ordnungsgemäß abgelegt ist. Wenn der jeweilige Gebäudebewohner, in dessen Keller beispielsweise das Telekommunikationskabel zu verlegen ist, zu diesem Zeitpunkt nicht anwesend, muss aufwendig mit entsprechenden Mehrkosten ein neuer Termin zur Installation abgestimmt werden.

Eine technische Lösung, die eine einfachere Installation des Telekommunikationskabels insbesondere mit reduziertem Personal ermöglicht, die unabhängig von der Anwesenheit des Gebäudebewohners durchführbar ist und die in sicherer und in dokumentierbarer Weise ablaufen kann, ist daher von hohem Interesse.

Es ist daher Aufgabe der vorliegenden Erfindung, ein Verfahren anzugeben zum Bau eines Rohrsystems für die Aufnahme wenigstens eines Telekommunikationskabels.

Durch ein solches Rohrsystem soll die Installation des Telekommunikationskabels im vorstehenden Sinne vereinfacht werden.

Eine weitere Aufgabe der vorliegenden Erfindung betrifft das Rohrsystem, das nach diesem Verfahren gebaut ist.

Die letzte Aufgabe der Erfindung besteht darin, ein Telekommunikationssystem, umfassend ein Rohrsystem und wenigstens ein Telekommunikationskabel, anzugeben.

Hier setzt die Erfindung ein, deren erste Aufgabe durch den Gegenstand des Anspruchs 1 gelöst ist.

Es wurde im Rahmen der vorliegenden Erfindung erkannt, dass ein Verfahren zum Bau eines Rohrsystems für die Aufnahme wenigstens eines Telekommunikationskabels mit folgenden Schritten die gestellte Aufgabe löst:
Bereitstellen eines Rohrbündels, in welchen mindestens ein Einzelrohr aufgenommen ist;
Verlegen des Rohrbündels entlang einer vorbestimmten Trasse;
Ermittlung der Längeninformation des Rohrbündels am Startpunkt anhand einer Rohrbündelkennzeichnung;
Identifikation und Ermittlung der Längeninformation des Einzelrohrs am Startpunkt anhand einer Rohrkennzeichnung;
Öffnung des Rohrbündels und Herausführung des Einzelrohrs an einem ersten Zielpunkt;
Ermittlung der Längeninformation des Rohrbündels am ersten Zielpunkt anhand der Rohrbündelkennzeichnung;
Identifikation und Ermittlung der Längeninformation des Einzelrohrs am ersten Zielpunkt anhand einer Rohrkennzeichnung;
Abtrennung des Einzelrohrs im Bereich des ersten Zielpunkts;
Bereitstellen eines Anschlussrohrs;
Verbinden des Endes des Einzelrohrs mit einem Anschlussrohr;
Identifikation und Ermittlung der Längeninformation des Anschlussrohrs im Bereich des ersten Zielpunkts anhand einer Anschlussrohrkennzeichnung;
Verlegen des Anschlussrohrs entlang einer vorbestimmten Anschlusstrasse bis zum zweiten Zielpunkt;
Identifikation und Ermittlung der Längeninformation des Anschlussrohrs am zweiten Zielpunkt anhand der Anschlussrohrkennzeichnung;
Addition der Länge des Einzelrohrs aus den Längeninformationen zwischen dem Startpunkt und dem ersten Zielpunkt und der Länge des Anschlussrohrs aus der Längeninformation zwischen dem ersten Zielpunkt und dem zweiten Zielpunkt;
Anzeige oder Bereitstellung einer Information über die Wegstrecke zwischen dem Startpunkt und dem zweiten Zielpunkt anhand der ermittelten Länge.

Durch das erfindungsgemäße Verfahren zum Bau eines Rohrsystems für die Aufnahme wenigstens eines Telekommunikationskabels ist es leicht möglich, eine Information hinsichtlich der Wegstrecke zwischen einem Startpunkt und einem zweiten Zielpunkt zu erhalten, wobei diese Information anschließend vorteilhaft für das Einbringen des Telekommunikationskabels in der erforderlichen Länge in das Rohrsystem genutzt werden kann.

Hierzu ist vorgesehen, dass die Einzelrohre, die in der Rohrhülle aufgenommen sind, und die Rohrhülle selbst sowie die Anschlussrohre Kennzeichnungen aufweisen, und zwar derart, dass wenigstens ein Einzelrohr an oder in seiner Außenoberfläche eine Rohrkennzeichnung aufweist, die sich wiederholend und zueinander beabstandet ausgebildet ist, und dass die Rohrhülle an oder in ihrer Außenoberfläche eine Rohrhüllenkennzeichnung aufweist, die sich wiederholend und zueinander beabstandet ausgebildet ist, und das Anschlussrohr an oder in seiner Außenoberfläche eine Rohrkennzeichnung aufweist, die sich wiederholend und zueinander beabstandet ausgebildet ist.

Durch diese Maßnahme können aus den Kennzeichnungen Informationen entnommen werden, die hilfreich genutzt werden können, um beim Aufbau eines Rohrsystems, insbesondere beim Aufbau eines Rohrsystems für ein Telekommunikationssystem, beim Betrieb des Rohrsystems und bei Wartungsarbeiten, Reparaturen, Ergänzungen, etc. diese Informationen gezielt für Dokumentationen dieses Systems zu nutzen.

Insbesondere kann so von der das Telekommunikationskabel am Startpunkt installierenden Person sofort erkannt werden, welche Länge des Telekommunikationskabels in das jeweilige Einzelrohr des Rohrbündels einzubringen bzw. einzublasen ist, um das Telekommunikationskabel bis zu dem Zielpunkt zu verlegen.

Es kann sich bei der vorliegenden Erfindung in ganz besonders vorteilhafter Weise herausstellen, wenn vorgesehen ist, dass das Verfahren zum Bau eines Rohrsystems so ausgeführt wird, dass die Ermittlung der Längeninformation des Rohrbündels anhand einer maschinenlesbaren Rohrbündelkennzeichnung und / oder die Identifikation und Ermittlung der Längeninformation des Einzelrohrs anhand einer maschinenlesbaren Rohrkennzeichnung und / oder die Identifikation und Ermittlung der Längeninformation des Anschlussrohrs anhand einer maschinenlesbaren Anschlussrohrkennzeichnung durchgeführt wird.

Durch das Vorsehen, dass die Ermittlung der Längeninformation des Rohrbündels anhand einer maschinenlesbaren Rohrbündelkennzeichnung und / oder die Identifikation und Ermittlung der Längeninformation des Einzelrohrs anhand einer maschinenlesbaren Rohrkennzeichnung und / oder die Identifikation und Ermittlung der Längeninformation des Anschlussrohrs anhand einer maschinenlesbaren Anschlussrohrkennzeichnung durchgeführt wird, kann ein schneller und vollständig oder zumindest weitgehend fehlerfreier Arbeitsablauf bei der Ermittlung der Längeninformationen und damit bei der Gewinnung der Information hinsichtlich der Wegstrecke zwischen einem Startpunkt und einem zweiten Zielpunkt sichergestellt werden. Weiterhin ist es durch diese Maßnahme möglich, dass die ermittelten Daten gespeichert, verarbeitet und für weitere Einsatzzwecke verwendbar sind.

Als besonders praktikabel kann sich bei dem erfindungsgemäßen Verfahren zum Bau eines Rohrsystems ergeben, wenn die Rohrbündelkennzeichnung und / oder die Rohrkennzeichnung und / oder die Anschlussrohrkennzeichnung jeweils in Form einer alphanumerischen Darstellung oder in Form eines Strichcodes oder in Form eines QR-Codes oder in Form einer gespeicherten Information in einem RFID-Element oder in einer Kombination der vorgenannten Darstellungen und Informationen ausgebildet ist.

Durch die Ausbildung einer Rohrbündelkennzeichnung und / oder einer Rohrkennzeichnung und / oder einer Anschlussrohrkennzeichnung jeweils in Form einer alphanumerischen Darstellung oder in Form eines Strichcodes oder in Form eines QR-Codes oder in Form einer gespeicherten Information in einem RFID-Element oder in einer Kombination der vorgenannten Darstellungen und Informationen ist es leicht möglich, ein Ablesen dieser Darstellungen oder Informationen mit Hilfe einer solche Darstellungen oder Informationen lesenden Maschinen vorzunehmen, um diese Darstellungen oder Informationen zu speichern, zu verarbeiten oder sie anderen Einsatzzwecken zur Verfügung zu stellen.

Es kann so auch leicht eine Identifikation von Einzelrohren eines Rohrbündels vorgenommen werden, wenn diese mit Einzelrohren eines anderen Rohrbündels verbunden werden sollen, und so eine exakte Dokumentation über die miteinander verbundenen Einzelrohre zu ermöglichen.

Insbesondere kann auch vorgesehen sein, dass die Informationen mit Hilfe eines Mobilphones gelesen werden können. Auf diese Weise kann eine einfache und schnelle Ermittlung und Verarbeitung der Informationen durchgeführt werden. Weiterhin ist es mit einem Mobilphone möglich, Fotoaufnahmen anzufertigen, um das Rohrbündel, dessen Verlegung, die herzustellenden Anschlüsse an die einzelnen Rohre des Rohrbündels und anderes mehr fotografisch zu dokumentieren.

Es kann sich bei der vorliegenden Erfindung als vorteilhaft ergeben, wenn vorgesehen ist, dass die Längeninformation des Rohrbündels, die aus der maschinenlesbaren Rohrbündelkennzeichnung ermittelbar ist, und die Längeninformation des Einzelrohrs, die aus der maschinenlesbaren Rohrkennzeichnung ermittelbar ist, derart korrespondieren, dass die aus der maschinenlesbaren Rohrbündelkennzeichnung ermittelte Längeninformation gleich der aus der maschinenlesbaren Rohrbündelkennzeichnung ermittelten Längeninformation ist.

Dadurch kann das Verfahren zum Bau eines Rohrsystems einfacher gestaltet werden, was Zeit- und Kosteneinsparungen mit sich bringt.

Bei dem erfindungsgemäßen Verfahren ist nach der Öffnung des Rohrbündels und dem Herausführung des Einzelrohrs an einem ersten Zielpunkt eine Abtrennung des Einzelrohrs durchzuführen.

Das Einzelrohr zwischen dem Startpunkt und dem ersten Zielpunkt wird dann benutzt, um das Telekommunikationskabel aufzunehmen.

Das verbliebene Einzelrohr ab dem ersten Zielpunkt kann entweder verschlossen werden, oder als "Backup-Rohr" verwendet werden. Es ist dazu ebenfalls mit einem Anschlussrohr zum zweiten Zielpunkt zu verbinden. Sollte das Telekommunikationskabel zwischen dem Startpunkt und dem zweiten Zielpunkt defekt sein, beschädigt werden oder anderweitig nicht betrieben werden können, kann so ein anderes Telekommunikationskabel diese Aufgabe übernehmen, indem dieses in das "Backup-Rohr" und das Anschlussrohr eingebracht wird und von einem Endpunkt des Rohrbündels mit einer Verteilerstation die Versorgung sicherzustellen.

Als besonders vorteilhaft kann sich bei dem Verfahren zum Bau eines Rohrsystems ergeben, wenn vorgesehen ist, dass das Verbinden des Endes des Einzelrohrs mit einem Anschlussrohr mit einem Adapter und / oder durch einen Schweißvorgang und / oder durch einen Klebevorgang vorgenommen wird.

Durch das Verbinden des Endes des Einzelrohrs mit einem Anschlussrohr mit einem Adapter und / oder durch einen Schweißvorgang und / oder durch einen Klebevorgang kann eine schnelle, sichere und dauerhafte, sowie kostengünstige Verbindung zwischen dem Einzelrohr und dem Anschlussrohr in einfacher Weise hergestellt werden.

Mit großem Vorteil bewähren kann sich bei der vorliegenden Erfindung, wenn vorgesehen ist, dass das Verfahren zum Bau eines Rohrsystems so vorgenommen wird, dass die Addition der Länge des Einzelrohrs aus den Längeninformationen zwischen dem Startpunkt und dem ersten Zielpunkt und der Länge des mit dem Einzelrohr verbundenen Anschlussrohrs aus der Längeninformation zwischen dem ersten Zielpunkt und dem zweiten Zielpunkt, und die Anzeige oder Bereitstellung der Information über die Wegstrecke zwischen dem Startpunkt und dem zweiten Zielpunkt anhand der ermittelten Länge mit einem Datenverarbeitungssystem durchgeführt wird.

Durch die Maßnahme, dass die Addition der Länge des Einzelrohrs aus der Längeninformationen zwischen dem Startpunkt und dem ersten Zielpunkt und der Länge des mit dem Einzelrohr verbundenen Anschlussrohrs aus der Längeninformation zwischen dem ersten Zielpunkt und dem zweiten Zielpunkt, und die Anzeige oder Bereitstellung der Information über die Wegstrecke zwischen dem Startpunkt und dem zweiten Zielpunkt anhand der ermittelten Länge mit einem Datenverarbeitungssystem durchgeführt wird, ist es schnell, fehlerfrei und sicher möglich, die auf diese Art gewonnenen Daten zu speichern, zu verarbeiten und sie weiteren Einsatzzwecken zuzuleiten bzw. für solche zur Verfügung zu stellen.

Als besonders günstig kann sich bei der vorliegenden Erfindung ergeben, wenn das Verfahren zum Bau eines Rohrsystems derart gestaltet wird, dass die Länge des Einzelrohrs zwischen dem Startpunkt und dem ersten Zielpunkt und die Länge des mit dem Einzelrohr verbundenen Anschlussrohrs zwischen dem ersten Zielpunkt und dem zweiten Zielpunkt, und die Information über die Wegstrecke zwischen dem Startpunkt und dem zweiten Zielpunkt dokumentiert und gespeichert sowie für ein Geoinformationssystem bereitgestellt wird.

Durch die besondere Gestaltung der vorliegenden Erfindung, nämlich dass die Länge des Einzelrohrs zwischen dem Startpunkt und dem ersten Zielpunkt und die Länge des mit dem Einzelrohr verbundenen Anschlussrohrs zwischen dem ersten Zielpunkt und dem zweiten Zielpunkt, und die Information über die Wegstrecke zwischen dem Startpunkt und dem zweiten Zielpunkt dokumentiert und gespeichert sowie für ein Geoinformationssystem bereitgestellt wird, ist es in einfacher Weise möglich, aus diesen Informationen beispielsweise eine Karte zu erstellen, die vorteilhaft genutzt werden kann zur Dokumentation des Rohrsystems, zur Fehlersuche, zur weiteren Ausbaumöglichkeit des Rohrsystems und zu dessen dokumentierten Betrieb.

Die auf diese Weise gewonnenen Informationen können auch vorteilhaft genutzt werden, um eine Gesamtdokumentation zu erstellen, die die eingesetzten Baumaterialien, also Rohre und Hilfsmaterialien, die Vorbereitung der Trasse zum Verlegen, den Zusammenbau des Rohrsystems, den Einbau des Rohrsystems entlang der Trasse, das Einbringen bzw. Einblasen von Telekommunikationskabeln, die Kartierung des Rohrsystems, die fotografische Erfassung wesentlicher Bau- und Verbindungselemente, die nach den gültigen Vorschriften erbrachten und abzurechnenden Bauleistungen, und anderes mehr umfasst.

Die weitere Aufgabe der vorliegenden Erfindung, ein Rohrsystem anzugeben, erfährt ihre Lösung durch den Gegenstand des Anspruchs 7.

Es wurde im Rahmen der Erfindung erkannt, dass ein Rohrsystem, das nach dem vorstehend beschriebenen Verfahren gebaut ist, sich über Rohrsysteme aus dem Stand der Technik erhebt und eine Vielzahl von Vorteilen mit sich bringt.

Durch die bekannte Wegstrecke zwischen dem Startpunkt und den jeweiligen zweiten Zielpunkten kann für jeden zweiten Zielpunkt die für die Installation des Telekommunikationskabels benötigte Länge einfach ermittelt werden, so dass das nachfolgende Einbringen bzw. Einblasen der Telekommunikationskabel schnell, einfach und kostengünstig erfolgen kann, ohne dass es der Anwesenheit des Gebäudebewohners bedarf.

Die letzte Aufgabe der vorliegenden Erfindung, ein Telekommunikationssystem anzugeben, erfahrt ihre Lösung durch den Gegenstand des Anspruchs 8.

Durch die vorliegende Erfindung wird ein Telekommunikationssystem bereitgestellt, welches ein Rohrsystem gemäß vorstehender Beschreibung und wenigstens ein Telekommunikationskabel umfasst, wobei das wenigstens eine Telekommunikationskabel in dem mindestens einem Rohr des Rohrbündels und dem mindestens einen Anschlussrohr aufgenommen ist.

Anwendung findet die vorliegende Erfindung im Bereich der Telekommunikationstechnik beim Bau von Rohrsystemen zur Aufnahme von Telekommunikationskabeln und bei der Bereitstellung von Telekommunikationssystemen, welche ein Rohrsystem gemäß vorstehender Beschreibung und wenigstens ein Telekommunikationskabel umfassen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Fig. dargestellt und wird in der nachfolgenden Beschreibung näher erläutert.

Hierzu zeigt:

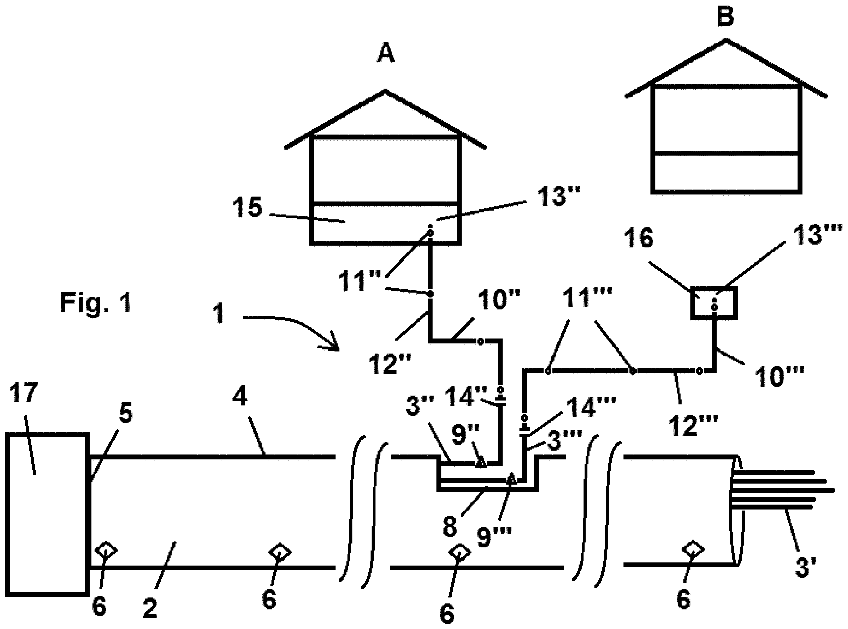

- Fig. 1: eine schematische Ansicht eines Rohrsystems, das nach dem Verfahren zum Bau eines Rohrsystems gebaut worden ist.

Die Fig.1 zeigt eine schematische Ansicht eines Rohrsystems 1, das nach dem erfindungsgemäßen Verfahren zum Bau eines Rohrsystems 1 gebaut worden ist.

Das Rohrsystem 1 umfasst ein Rohrbündel 2, in dem Einzelrohre 3', 3", 3'" aufgenommen sind.

Das Rohrbündel 2 ist entlang einer Trasse 4 verlegt, wobei die Trasse 4 beispielsweise entlang einer Straße in einem Neubaugebiet verläuft.

Das Rohrbündel 2 weist Rohrbündelkennzeichnungen 6 auf, die auf der äußeren Oberfläche des Rohrbündels 2 angebracht sind. Die Rohrbündelkennzeichnungen 6 des Rohrbündels 2 sind maschinenlesbar ausgebildet. Die Rohrbündelkennzeichnungen 6 beinhalten Informationen, die sich insbesondere auf die Länge des Rohrbündels 2 beziehen.

Das Rohrbündel 2 geht von einer Verteilerstation 17 aus und hat dort seinen Startpunkt 5.

Alle Einzelrohre 3', 3", 3'" weisen an ihrer äußeren Oberfläche Rohrkennzeichnungen 9", 9'" auf, wobei diese Informationen beinhalten, insbesondere solche, die sich auf die Länge eines jeden Einzelrohrs 3', 3", 3'" beziehen.

An einem bestimmten Ort des Rohrbündels 2 ist ein erster Zielpunkt 8 angeordnet, an diesem ist eine Öffnung in die Hülle des Rohrbündels 2 eingebracht.

Aus der Öffnung der Hülle des Rohrbündels 2 sind gemäß Fig. 1 zwei Einzelrohre 3' und 3" ein Stück weit herausgeführt und abgeschnitten, wobei zwei Enden 14' und 14" ausgebildet sind.

Das Ende 14" des Einzelrohrs 3" ist beispielsweise durch Verschweißen und / oder durch Verkleben oder durch einen Adapter mit einem Anschlussrohr 10" verbunden.

Das Ende 14'" des Einzelrohrs 3'" ist beispielsweise durch Verschweißen und / oder durch Verkleben oder durch einen Adapter mit einem Anschlussrohr 10'" verbunden.

Das Anschlussrohr 10" ist entlang einer Anschlusstrasse 12" zu einem ersten Grundstück A verlegt und endet dort im Keller 15 des auf dem Grundstück A erbauten Gebäudes am zweiten Zielpunkt 13".

Das Anschlussrohr 10" weist auf seiner äußeren Oberfläche Anschlussrohrkennzeichnungen 11" auf, welche Informationen beinhalten, insbesondere welche Informationen über die Länge des Anschlussrohrs 10" beinhalten.

Das Anschlussrohr 10'" ist entlang einer Anschlusstrasse 12'" zu einem zweiten Grundstück B verlegt und endet dort in einer Erdbox 16 auf dem Grundstück A am zweiten Zielpunkt 13'".

Das Anschlussrohr 10'" weist auf seiner äußeren Oberfläche Anschlussrohrkennzeichnungen 11'" auf, welche Informationen beinhalten, insbesondere welche Informationen über die Länge des Anschlussrohrs 10'" beinhalten.

Durch die Ausbildung von maschinenlesbaren Rohrbündelkennzeichnungen 6 auf dem Rohrbündel 2, von maschinenlesbaren Rohrkennzeichnungen 9", 9'" und von maschinenlesbaren Anschlussrohrkennzeichnungen 11", 11'" ist es mithilfe einer Maschine zum Lesen der maschinenlesbaren Kennzeichnungen bei der Installation des Rohrsystems 1 leicht möglich, die Summe der Länge jedes Einzelrohres 3", 3'" und der Länge jedes mit dem jeweiligen Einzelrohr 3", 3'" verbundenen Anschlussrohrs 10", 10"' zu ermitteln, und auf diese Weise jeweils eine Länge zwischen dem Startpunkt 5 und dem jeweiligen zweiten Zielpunkt 13", 13'" zu ermitteln.

Aus dieser jeweiligen Länge zwischen dem Startpunkt 5 und dem jeweiligen zweiten Zielpunkt 13", 13'" kann unmittelbar die benötigte Länge des einzubringenden Telekommunikationskabels bestimmt werden.

Es versteht sich, dass die benötigte Länge des einzubringenden Telekommunikationskabels dabei stets etwas größer bemessen wird, um sowohl im Keller 15 am zweiten Zielpunkt 13", wie auch in der Erdbox 6 am zweiten Zielpunkt 13'" die jeweils notwendigen Anschlussarbeiten "mit Kabellängenreserve" an die dortigen Empfangsgeräte durchführen zu können.

### Bezugszeichenliste

- 1: Rohrsystem
- 2: Rohrbündel
- 3', 3", 3''': Einzelrohr
- 4: Trasse
- 5: Startpunkt
- 6: Rohrbündelkennzeichnung
- 7: Rohrkennzeichnung
- 8: erster Zielpunkt
- 9", 9''': Rohrkennzeichnung
- 10", 10''': Anschlussrohr
- 11", 11''': Anschlussrohrkennzeichnung
- 12", 12''': Anschlusstrasse
- 13", 13''': zweiter Zielpunkt
- 14", 14''': Ende
- 15: Keller
- 16: Erdbox
- 17: Verteilerstation
- A: erstes Grundstück
- B: zweites Grundstück

## Patentansprüche

1. Verfahren zum Bau eines Rohrsystems (1) für die Aufnahme wenigstens eines Telekommunikationskabels mit folgenden Schritten:
Bereitstellen eines Rohrbündels (2), in welchen mindestens ein Einzelrohr (3', 3", 3"') aufgenommen ist;
Verlegen des Rohrbündels (2) entlang einer vorbestimmten Trasse (4);
Ermittlung der Längeninformation des Rohrbündels (2) am Startpunkt (5) anhand einer Rohrbündelkennzeichnung (6);
Identifikation und Ermittlung der Längeninformation des Einzelrohrs (3', 3", 3"') am Startpunkt (5) anhand einer Rohrkennzeichnung (7);
Öffnung des Rohrbündels (2) und Herausführung des Einzelrohrs (3", 3"') an einem ersten Zielpunkt (8);
Ermittlung der Längeninformation des Rohrbündels (2) am ersten Zielpunkt (8) anhand der Rohrbündelkennzeichnung (6);
Identifikation und Ermittlung der Längeninformation des Einzelrohrs (3", 3"') am ersten Zielpunkt (8) anhand einer Rohrkennzeichnung (9", 9''');
Abtrennung des Einzelrohrs (3", 3"') im Bereich des ersten Zielpunkts (8);
Bereitstellen eines Anschlussrohrs (10", 10"');
Verbinden des Endes (14", 14"') des Einzelrohrs (3", 3'") mit einem Anschlussrohr (10", 10'");
Identifikation und Ermittlung der Längeninformation des Anschlussrohrs (10", 10'") im Bereich des ersten Zielpunkts (8) anhand einer Anschlussrohrkennzeichnung (11", 11'");
Verlegen des Anschlussrohrs (10", 10'") entlang einer vorbestimmten Anschlusstrasse (12", 12'") bis zum zweiten Zielpunkt (13", 13'");
Identifikation und Ermittlung der Längeninformation des Anschlussrohrs (10", 10'") am zweiten Zielpunkt (13", 13'") anhand der Anschlussrohrkennzeichnung (11", 11'");
Addition der Länge des Einzelrohrs (3", 3'") aus den Längeninformationen zwischen dem Startpunkt (5) und dem ersten Zielpunkt (8) und der Länge des Anschlussrohrs (10", 10"') aus der Längeninformation zwischen dem ersten Zielpunkt (8) und dem zweiten Zielpunkt (13", 13"');
Anzeige oder Bereitstellung einer Information über die Wegstrecke zwischen dem Startpunkt (5) und dem zweiten Zielpunkt (13", 13'") anhand der ermittelten Länge.

2. Verfahren zum Bau eines Rohrsystems (1) nach Anspruch 1, **dadurch gekennzeichnet, dass** die Ermittlung der Längeninformation des Rohrbündels (2) anhand einer maschinenlesbaren Rohrbündelkennzeichnung (6) und / oder die Identifikation und Ermittlung der Längeninformation des Einzelrohrs (3", 3'") anhand einer maschinenlesbaren Rohrkennzeichnung (9", 9'") und / oder die Identifikation und Ermittlung der Längeninformation des Anschlussrohrs (10", 10'") anhand einer maschinenlesbaren Anschlussrohrkennzeichnung (11", 11'") durchgeführt wird.

3. Verfahren zum Bau eines Rohrsystems (1) nach Anspruch 1 oder 2, **dadurch gekennzeichnet, dass** die Rohrbündelkennzeichnung (6) und / oder die Rohrkennzeichnung (9", 9'") und / oder die Anschlussrohrkennzeichnung (11", 11'") jeweils in Form einer alphanumerischen Darstellung oder in Form eines Strichcodes oder in Form eines QR-Codes oder in Form einer gespeicherten Information in einem RFID-Element oder in einer Kombination der vorgenannten Darstellungen und Informationen ausgebildet ist.

4. Verfahren zum Bau eines Rohrsystems (1) nach einem der vorangehenden Ansprüche, **dadurch gekennzeichnet, dass** das Verbinden des Endes (14", 14'") des Einzelrohrs (3", 3'") mit einem Anschlussrohr (10", 10'") mit einem Adapter und / oder durch einen Schweißvorgang und / oder durch einen Klebevorgang vorgenommen wird.

5. Verfahren zum Bau eines Rohrsystems (1) nach einem der vorangehenden Ansprüche, **dadurch gekennzeichnet, dass** die Addition der Länge des Einzelrohrs (3", 3'") aus den Längeninformationen zwischen dem Startpunkt (5) und dem ersten Zielpunkt (8) und der Länge des mit dem Einzelrohr (3", 3"') verbundenen Anschlussrohrs (10", 10"') aus der Längeninformation zwischen dem ersten Zielpunkt (8) und dem zweiten Zielpunkt (13", 13"'), und die Anzeige oder Bereitstellung der Information über die Wegstrecke zwischen dem Startpunkt (5) und dem zweiten Zielpunkt (13", 13'") anhand der ermittelten Länge mit einem Datenverarbeitungssystem durchgeführt wird.

6. Verfahren zum Bau eines Rohrsystems (1) nach Anspruch 5, **dadurch gekennzeichnet, dass** die Länge des Einzelrohrs (3", 3'") zwischen dem Startpunkt (5) und dem ersten Zielpunkt (8) und die Länge des mit dem Einzelrohr (3", 3'") verbundenen Anschlussrohrs (10", 10'") zwischen dem ersten Zielpunkt (8) und dem zweiten Zielpunkt (13", 13'"), und die Information über die Wegstrecke zwischen dem Startpunkt (5) und dem zweiten Zielpunkt (13", 13'") dokumentiert und gespeichert sowie für ein Geoinformationssystem bereitgestellt wird.

7. Rohrsystem (1), gebaut nach dem Verfahren nach einem der Ansprüche 1 bis 6.

8. Telekommunikationssystem, umfassend ein Rohrsystem (1) gemäß Anspruch 7, wobei wenigstens ein Telekommunikationskabel in dem mindestens einem Rohr (3', 3", 3'") des Rohrbündels (2) aufgenommen ist.
